# EUROPÄISCHE PATENTANMELDUNG

(11) **EP 2 263 907 A1**
(43) Veröffentlichungstag der Anmeldung: **22.12.2010**
(21) Anmeldenummer: 10165460.6
(22) Anmeldetag: 10.06.2010
(51) Int. Cl.: B60L 11/18, H02J 7/02

(54) **Vorrichtung zum Betreiben eines Fahrzeuges**

(30) Priorität: 18.06.2009 DE 102009025477
(71) Anmelder: SIEMENS AKTIENGESELLSCHAFT, 80333 München (DE)
(72) Erfinder: Meinert, Michael, 91056, Erlangen (DE); Rechenberg, Karsten, 91077, Dormitz (DE)

(57) **Zusammenfassung**

Die Erfindung betrifft eine Vorrichtung zum Betreiben eines Fahrzeuges, insbesondere eines Schienenfahrzeuges, wobei eine Energiezuführungseinrichtung (1) über einen Antriebsstromrichter mit einer Antriebseinrichtung (4) und über einen Energiespeicherstromrichter (2) mit einem Energiespeicher (3) verbunden ist. Es ist vorgesehen, dass der Energiespeicherstromrichter (2) umkonfigurierbar ist. Sein Ausgang ist mit dem Energiespeicher (3) und mit der Antriebseinrichtung (4) über Schalter (11 und 12) verbunden, so dass der Energiespeicherstromrichter (2) statt mit dem Energiespeicher (3) mit der Antriebseinrichtung (4) verbunden werden kann.

## Beschreibung

Die Erfindung betrifft eine Vorrichtung zum Betreiben eines Fahrzeuges, insbesondere eines Schienenfahrzeuges, wobei eine Energiezuführungseinrichtung über einen Antriebsstromrichter mit einer Antriebseinrichtung und über einen Energiespeicherstromrichter mit einem Energiespeicher verbunden ist.

Ein solches Fahrzeug kann ein elektrisch angetriebenes spurgeführtes Fahrzeug sein, aber auch ein elektrisch angetriebenes Straßenfahrzeug, z. B. ein Bus oder ein LKW.

Besonders bei einem kleinen elektrisch angetriebenen Fahrzeug, das über einen Zwischenkreis verfügt, aber auch bei einem großen Fahrzeug, ist es üblich, die Antriebseinrichtung, also die Motoren, über - häufig nur einen oder zwei - Antriebsstromrichter mit elektrischer Energie zu versorgen.

Es ist außerdem üblich, dass in einem solchen Fahrzeug ein Energiespeicher vorhanden ist zum Speichern und späteren Nutzen von Energie, z. B. der beim Bremsen generatorisch erzeugten Energie. Einem solchen Energiespeicher ist ein Energiespeicherstromrichter vorgeschaltet. Ein solcher Energiespeicherstromrichter hat in der Regel die gleichen Leistungsanforderungen wie ein Antriebsstromrichter.

Falls bei einer solchen bekannten Vorrichtung im Antriebsstromrichter ein Fehler auftritt, kann das Fahrzeug abhängig von der Fehlerart überhaupt nicht mehr oder nur noch stark eingeschränkt betrieben werden.

Der Erfindung liegt die Aufgabe zugrunde, eine Vorrichtung zum Betreiben eines Fahrzeuges anzugeben, bei der, selbst dann, wenn der Antriebsstromrichter ausgefallen ist, das Fahrzeug weiterhin in Betrieb bleiben kann.

Die Aufgabe wird gemäß der Erfindung dadurch gelöst, dass der Energiespeicherstromrichter umkonfigurierbar ist und dass sein Ausgang mit dem Energiespeicher und mit der Antriebseinrichtung über Schalter verbunden ist zum Verbinden des Energiespeicherstromrichters mit der Antriebseinrichtung statt mit dem Energiespeicher.

Es wird der Vorteil erzielt, dass dann, wenn der Antriebsstromrichter ausfällt oder gestört ist, sofort der noch funktionstüchtige Energiespeicherstromrichter mit der Antriebseinrichtung verbunden werden kann, um den Weiterbetrieb des Fahrzeuges zu gewährleisten.

Durch das Umkonfigurieren des Energiespeicherstromrichters wird erreicht, dass er statt als mehrsträngiger DC/DC-Steller für den Energiespeicher als Wechselrichter für die Antriebseinheit arbeitet. Während der Energiespeicher mit Gleichstrom zu versorgen ist, benötigt die Antriebseinrichtung Wechselstrom.

Mit dem Ausgang des Energiespeicherstromrichters stehen sowohl der Energiespeicher als auch die Antriebseinrichtung über Zuleitungen in Verbindung, wobei Schalter in diesen Zuleitungen stets so geschaltet werden, dass entweder der Energiespeicher oder die Antriebseinrichtung angeschlossen sind. Dabei wird der Energiespeicher abgetrennt und die Antriebseinrichtung wird angeschlossen, wenn der Energiespeicherstromrichter umkonfiguriert ist.

Es wird der Vorteil erzielt, dass der Energiespeicherstromrichter bei Bedarf sofort einen Antriebsstromrichter ersetzen kann, so dass selbst, wenn ein Antriebsstromrichter ausfällt, der Weiterbetrieb des Fahrzeuges stets gewährleistet ist.

Beispielsweise ist zur Energieversorgung aus dem Energiespeicher dieser über Schalter mit dem Eingang des Energiespeicherstromrichters verbunden.

Damit wird der Vorteil erzielt, dass dann, wenn die Energiezuführungseinrichtung nicht ausreichend elektrische Energie liefert und der Energiespeicherstromrichter die Antriebseinrichtung versorgen soll, die im Energiespeicher gespeicherte Energie direkt dem Energiespeicherstromrichter und damit der Antriebseinrichtung zugeleitet werden kann.

Der Energiespeicher ist als Energiequelle beispielsweise parallel zum Zwischenkreiskondensator des Energiespeicherstromrichters geschaltet.

Beispielsweise sind im Energiespeicher jedem der vorhandenen Speicherkondensatoren und jeder der vorhandenen Speicherbatterien als Entkopplungsdrosseln dienende Chopperdrosseln vorgeschaltet.

Beispielsweise ist mindestens ein vorhandener Speicherkondensator und/oder mindestens eine Speicherbatterie des Energiespeichers über einen Schalter mit dem Eingang des Energiespeicherstromrichters verbunden.

Dieser Schalter wird nur dann geschlossen, wenn der Energiespeicherstromrichter einen Antriebsstromrichter ersetzen soll. Die an dem mindestens einen Speicherkondensator anliegende Gleichspannung wirkt als Signal, das das Umkonfigurieren des Energiespeicherstromrichters auslöst. Der Schalter schließt, wenn beispielsweise die Zwischenkreisspannung unter die Energiespeicherspannung absinkt, und öffnet, wenn die Zwischenkreisspannung über die maximal zulässige Energiespeichespannung steigt. Außerdem dient sie zur zusätzlichen Energieversorgung des Energiespeicherstromrichters und damit der Antriebseinrichtung.

Mit der Vorrichtung zum Betreiben eines Fahrzeuges nach der Erfindung wird insbesondere der Vorteil erzielt, dass ein ohnehin vorhandener Energiespeicherstromrichter einen gestörten oder sogar ausgefallenen Antriebsstromrichter ersetzen kann. Die Vorrichtung kann bei elektrisch angetriebenen Fahrzeugen sowohl mit Gleichstromantrieb als auch mit Drehstromantrieb oder Wechselstromantrieb eingesetzt werden.

Die Verfügbarkeit des Fahrzeuges wird mit der Vorrichtung erhöht, bei einem Fahrzeug mit nur einem Antriebsstromrichter verdoppelt.

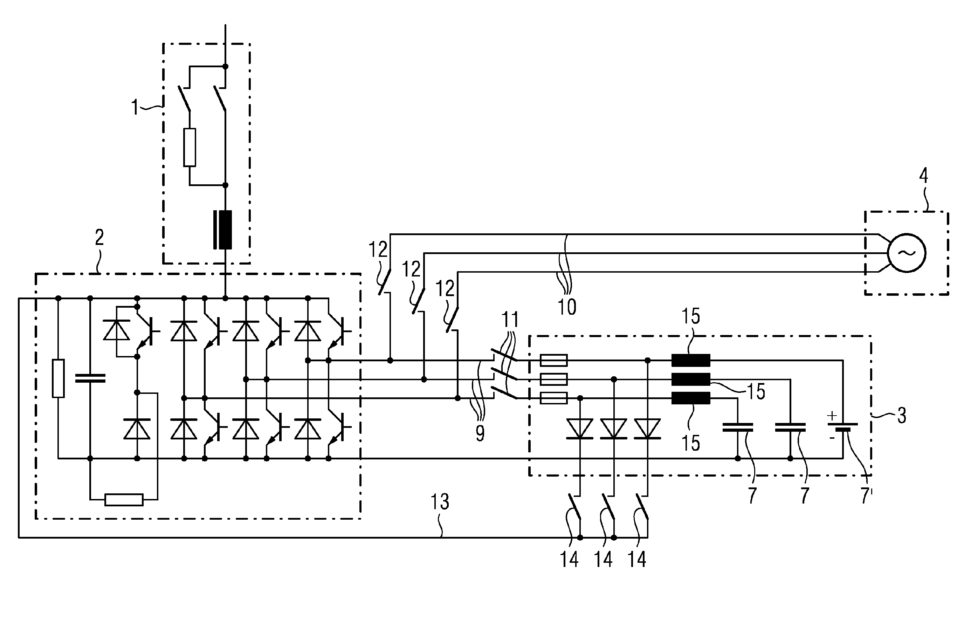

Ein Ausführungsbeispiel der Vorrichtung zum Betreiben eines Fahrzeuges gemäß der Erfindung wird anhand der Zeichnung näher erläutert:
Die Zeichnung zeigt eine Energiezuführungseinrichtung 1, die über einen Energiespeicherstromrichter 2 mit einem Energiespeicher 3 verbunden ist. Damit der Energiespeicherstromrichter 2 einen nicht gezeigten Antriebsstromrichter, der nicht funktionsfähig ist, ersetzen kann, muss der Energiespeicherstromrichter 2 so umkonfiguriert werden, dass er nicht als mehrsträngiger DC/DC-Steller arbeitet, der zum Laden des Energiespeichers 3 benötigt wird, sondern als Drehstrom oder Wechselstrom erzeugender Wechselrichter, der zur Versorgung einer Antriebseinrichtung 4 geeignet ist.

Der Energiespeicherstromrichter 2 ist ausgangsseitig über erste Zuleitungen 9 mit dem Energiespeicher 3 und über zweite Zuleitungen 10 mit der Antriebseinrichtung 4 verbunden. In den ersten Zuleitung 9 befinden sich erste Schalter 11 und in den zweiten Zuleitung 10 befinden sich zweite Schalter 12. Zum Umkonfigurieren dient eine nicht gezeigte interne Steuereinheit des Energiespeicherstromrichters 2. Für das Umkonfigurieren werden die ersten Schalter 11 geöffnet, der Energiespeicherstromrichter 2 umprogrammiert, die Datensätze für den Wechselrichterbetrieb geladen und anschließend die zweiten Schalter 12 geschlossen.

Für eine zusätzliche Energieversorgung der Antriebseinrichtung 4 aus dem Energiespeicher 3, die notwendig wird, wenn die Energieversorgung aus der Energiezuführungseinrichtung 1 nicht ausreicht, ist der Energiespeicher 3 über eine Versorgungsleitung 13, in der sich ein dritter dreipolig ausgebildeter Schalter 14 befindet, mit dem Eingang des Energiespeicherstromrichters 2 verbunden. Der dritte Schalter 14 wird bei einem zusätzlichen Energiebedarf geschlossen, wenn die Zwischenkreisspannung des Energiespeicherstromrichters unter die Energiespeicherspannung abgesunken ist.

Im Energiespeicher 3 sind jedem der vorhandenen Speicherkondensatoren 7 und der vorhandenen Speicherbatterie 7' als Entkopplungsdrosseln dienende Chopperdrosseln 15 vorgeschaltet.

Mit der Vorrichtung nach der Erfindung ist es möglich, den Energiespeicherstromrichter 2 bei Bedarf zur Versorgung der Antriebseinrichtung 4 einzusetzen.

## Patentansprüche

1. Vorrichtung zum Betreiben eines Fahrzeuges, insbesondere eines Schienenfahrzeuges, wobei eine Energiezuführungseinrichtung (1) über einen Antriebsstromrichter mit einer Antriebseinrichtung (4) und über einen Energiespeicherstromrichter (2) mit einem Energiespeicher (3) verbunden ist, **dadurch gekennzeichnet, dass** der Energiespeicherstromrichter (2) umkonfigurierbar ist und dass sein Ausgang mit dem Energiespeicher (3) und mit der Antriebseinrichtung (4) über Schalter (11 und 12) verbunden ist zum Verbinden des Energiespeicherstromrichters (2) mit der Antriebseinrichtung (4) statt mit dem Energiespeicher (3).

2. Vorrichtung nach Anspruch 1, **dadurch gekennzeichnet, dass** zur Energieversorgung aus dem Energiespeicher (3) dieser über Schalter (14) mit dem Eingang des Energiespeicherstromrichters (2) verbunden ist.

3. Vorrichtung nach Anspruch 2, **dadurch gekennzeichnet, dass** mindestens einen Speicherkondensator (7) und/oder mindestens eine Speicherbatterie (7') des der Energiespeichers (3) über den Schalter (14) mit dem Eingang des Energiespeicherstromrichters (2) verbunden sind.

4. Vorrichtung nach Anspruch 3, **dadurch gekennzeichnet, dass** die mindestens eine Speicherbatterie (7') des Energiespeichers (3) über eine Entkopplungsdiode mit dem Eingang des Energiespeicherstromrichters (2) verbunden ist.
